# EUROPEAN PATENT APPLICATION

(11) **EP 4 293 545 A1**
(43) Date of publication of application: **20.12.2023**
(21) Application number: 23711927.6
(22) Date of filing: 27.02.2023
(51) Int. Cl.: G06F 21/44

(54) **METHOD FOR AUTHENTICATING ELECTRONIC DEVICE, AND ELECTRONIC DEVICE THEREFOR**

(30) Priority: 22.04.2022 KR 20220050166; 14.06.2022 KR 20220071867
(71) Applicant: Samsung Electronics Co., Ltd., Suwon-si, Gyeonggi-do 16677 (KR)
(72) Inventor: KIM, Joohyun, Suwon-si, Gyeonggi-do 16677 (KR); CHOI, Sangsun, Suwon-si, Gyeonggi-do 16677 (KR)
(74) Representative: HGF
(86) International application number: PCT/KR2023/002737
(87) International publication number: WO 2023/204427

(57) **Abstract**

An electronic device according to various embodiments disclosed in the document may include a communication circuit, a user interface module, and a processor operatively connected to the communication circuit and the user interface module, and the processor may be configured to identify at least one neighboring electronic device that is capable of performing user authentication in response to a user authentication request, to provide, via the user interface module, the list of the at least one neighboring electronic device capable of performing user authentication, and to transmit a request to an authentication server for performing user authentication using an electronic device selected from the list of the at least one neighboring electronic device capable of performing user authentication.

## Description

### [Technical Field]

Various embodiments disclosed in the document relate to a method of authenticating an electronic device and an electronic device thereof In particular, various embodiments relate to a method of authenticating an electronic device via an external electronic device and an electronic device thereof.

### [Background Art]

As technologies have been developed, user needs for various services provided using a plurality of electronic devices have increased. Accordingly, multiple electronic devices are managed and used using a single user account via authentication, and thus, various issues related to authentication and management have arisen. For example, in the case of authenticating each of a plurality of electronic devices, authentication may be performed by manually inputting user information to each electronic device.

### [Disclosure of Invention]

### [Technical Problem]

In the case that various types of user information such as a user ID, a password, or an authentication key are used in order to authenticate an electronic device, there may be a drawback of relying on a user's memory and a security issue associated with information leakage. For example, it can be difficult for a user to remember several different passwords for different devices, applications, and websites, so it can be frustrating and difficult for a user to try to remember and input the correct password each time. Moreover, passwords can be shared, leaked or guessed by other people, so can be difficult to secure. As another example, a physical authentication key may be lost or stolen which prevents the intended user from performing an authentication and may enable an unintended user to successfully perform the authentication.

In addition, a user can be provided with an authentication request method which is difficult or inappropriate for the user to fulfil in a particular situation. For example, it may be inappropriate for the user to use voice authentication in a quiet environment, such as a library. It may also be very difficult for the user to successfully perform voice authentication in a loud environment, such as a concert, due to the surrounding noise. Moreover, facial recognition authentication may be difficult to perform when a user is wearing a mask or sunglasses because such items cover a portion of the user's face and make it difficult for the authentication means to recognize the user's face. Furthermore, it is inconvenient for the user to successfully use fingerprint authentication when the user is wearing gloves. In all of these situations, it will be frustrating, inconvenient and difficult or even impossible for the user to successfully authenticate their device.

Moreover, a user authentication request may be delivered to an unintended device, which may pose a security risk. It may be inconvenient, difficult or even impossible for the user to successfully perform an authentication if the authentication request is delivered to the unintended device. For example, the authentication request may be transmitted to a device which is far from a user's location, or to a device in a locked room to which the user does not have access. Furthermore, when user authentication requests are transmitted to an authenticating device, they are typically displayed directly on the screen or display of said device. This can pose a security risk because another person using or in view of the authenticating device may accept or reject the authentication request regardless of the actual user's intention.

Various embodiments disclosed in the document are to provide a method of performing authentication using another electronic device of which authentication has been completed, in order to authenticate an electronic device, and an electronic device therefor.

The technical subject matter of the disclosure is not limited to the above-mentioned technical subject matter, and other technical subject matters which are not mentioned may be clearly understood by those skilled in the art based on the following description.

### [Solution to Problem]

An electronic device according to various embodiments disclosed in the document may include a communication circuit, a user interface module, and a processor operatively connected to the communication circuit and the user interface module, and the processor may be configured to identify at least one neighboring electronic device that is capable of performing user authentication in response to a user authentication request, to provide, via the user interface module, the list of the at least one neighboring electronic device capable of performing user authentication, and to transmit, to an authentication server, a request for user authentication to be performed via an electronic device selected from the list of the at least one neighboring electronic device capable of performing user authentication.

A method of an electronic device according to various embodiments disclosed in the document may include an operation of identifying at least one neighboring electronic device capable of performing user authentication in order to perform user authentication for the electronic device, an operation of providing a list of the at least one neighboring electronic device capable of performing user authentication, and an operation of transmitting a request to an authentication server for performing user authentication using an electronic device selected from the list of the at least one neighboring electronic device capable of performing user authentication.

### [Advantageous Effects of Invention]

According to various embodiments, authentication of an electronic device may be performed using another electronic device of which authentication has been completed.

According to various embodiments, authentication of an electronic device may be performed by selecting another electronic device to authenticate the electronic device.

According to various embodiments, authentication may be performed by providing authentication information associated with another electronic device to perform authentication of an electronic device, and selecting another electronic device to perform authentication based on the authentication information.

Advantageously, the present invention enables a user to more easily and conveniently perform a user authentication procedure. Identifying neighbouring devices, or devices within a certain proximity of the user, advantageously ensures that the user is more likely to be able to conveniently use the neighbouring device as an authentication device. In addition, by using a local network method or device such as DLNA or Bluetooth that uses a home network, information about the user authentication method of a product capable of user authentication in the same space is more easily collected and transmitted to the user.

Further advantageously, an authentication request is transmitted to an electronic device that is convenient and safe for the user to use. The user is able to choose an electronic device from a list of devices which has an appropriate authentication method for a particular situation. For example, if a user is in a library, the user may choose an authenticating electronic device which includes fingerprint or facial recognition as an authentication method, rather than an electronic device which relies on voice recognition as an authentication method.

Further advantageously, the user is able to select an authenticating device which is located in a place which is convenient for a user. For example, a device which is geographically the closest device by distance may not be an appropriate authenticating device for a user if the user is unable to access the room or location in which the potential authenticating device is stored. In this invention, a user can select an authenticating device from a list of potential devices which ensures that the most appropriate authenticating device is selected according to a user's needs and circumstances at that time.

In other words, the user can advantageously authenticate an electronic device using another electronic device in a manner which is user-friendly and convenient in terms of one or more of the location of the authenticating device, the method of authentication or the security of the authentication method.

In addition, various effects directly or indirectly recognized from the document may be provided.

### [Brief Description of Drawings]

Regarding the descriptions of drawings, identical or like reference numerals in the drawings denote identical or like component elements.
FIG. 1 is a block diagram illustrating an electronic device in a network environment according to various embodiments.
FIG. 2 is a diagram illustrating a user authentication environment of an electronic device according to various embodiments.
FIG. 3 is a block diagram illustrating an electronic device in a network environment according to various embodiments.
FIG. 4 is a flowchart illustrating the operation of an electronic device according to various embodiments.
FIG. 5 is a diagram illustrating an example of a signal flow in association with operation performed among an electronic device, another electronic device, and a server according to various embodiments.
FIG. 6 is a diagram illustrating another example of a signal flow in association with operation performed among an electronic device, another electronic device, and a server according to various embodiments.
FIG. 7 is a diagram illustrating an example of an authentication screen associated with an authentication operation performed between an electronic device and another electronic device according to various embodiments.
FIG. 8 is a diagram illustrating an example of a signal flow that describes an operation of searching for another electronic device capable of performing authentication, by an electronic device according to various embodiments.

### [Mode for the Invention]

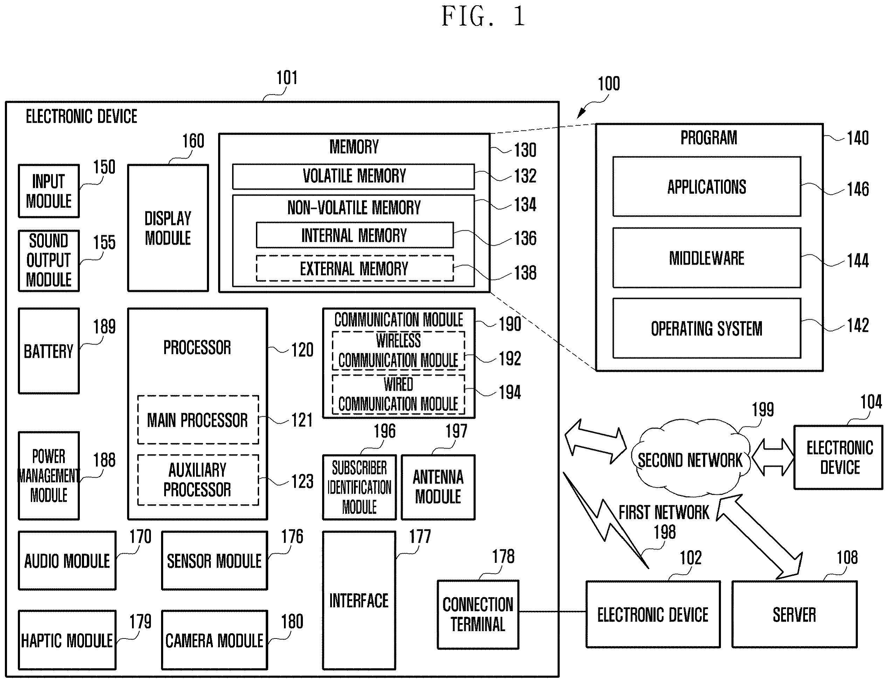

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

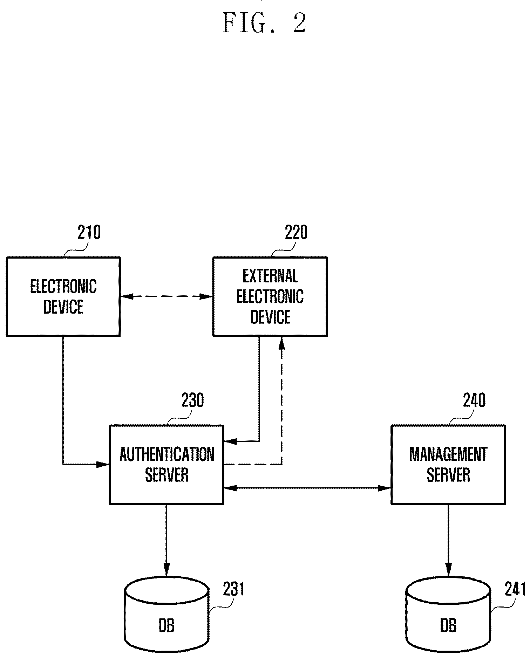

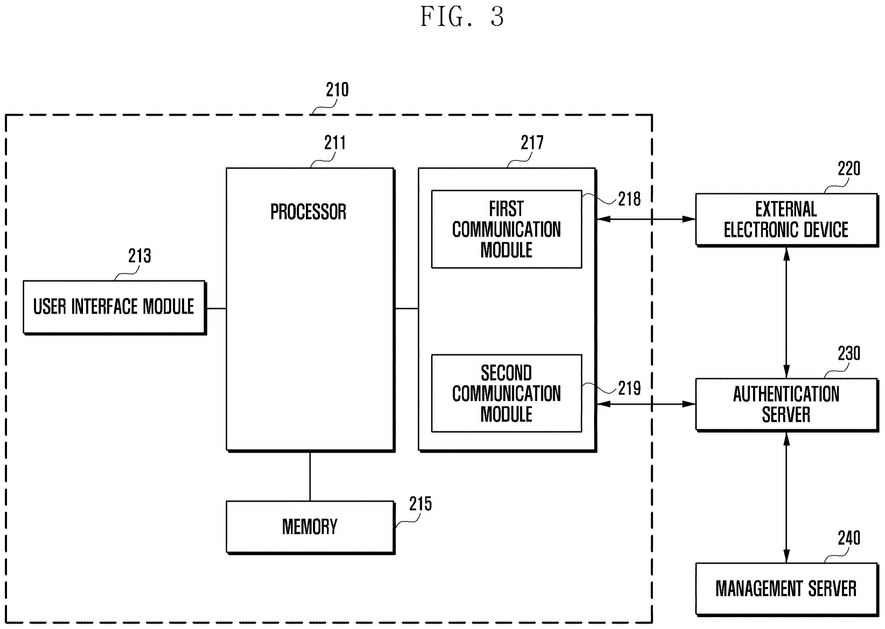

FIGS. 2 and 3 are diagrams illustrating a user authentication environment of an electronic device according to various embodiments.

Referring to FIGS. 2 and 3, an electronic device, or electronic device to be authenticated, 210 (e.g., the electronic device 101 of FIG. 1) may communicate with an authentication server 230 (e.g., the server 108 of FIG. 1) to perform authentication, and may perform user authentication using an external electronic device or authenticating device 220 (e.g., the electronic device 102 or 104 of FIG. 1). The electronic device 210 and the external electronic device 220 may be devices of the same type or may be devices of various different types. The electronic device 210 and the external electronic device 220 may include, for example, a portable communication device (e.g., a smartphone), a computer device, a portable multimedia device, a portable medical device, a camera, a wearable device, or home appliances.

According to various embodiments, based on various security techniques for performing authentication of an individual, for example, the fast identity online (FIDO) standard, the electronic device 210 and the authentication server 230 may transmit and receive encrypted data, and may decode received data.

The authentication server 230 according to various embodiments may store, in a database 231, authentication-related information associated with various electronic devices capable of performing user authentication. The authentication-related information may include various types of information such as a user ID, account information, a device number of an authenticated electronic device, address information such as an IP address, an authentication scheme of an authenticated electronic device, and an encryption key used for authentication encryption. For example, the authentication server 230 may provide, for example, a PIN number to the electronic device 210 in order to authenticate the electronic device 210, and accordingly, when the PIN number provided by the external electronic device 220 capable of performing authentication is input, the authentication server 230 may successfully complete authentication of the electronic device 210 and may register the electronic device 210. Here, although the authentication server 230 and a management server 240 are described as servers independent from each other, the management server 240 may be configured to integrate with the authentication server 230 as a single entity.

According to various embodiments, when user authentication is completed, the authentication server 230 may transfer the corresponding activity to the management server 240, so as to store the same in a database 241. The management server 240 may store various activities including authentication performed by the electronic device 210 via a network and, based thereon, may identify a security level of the authenticated electronic device 210. An authentication-related activity that the management server 240 manages may include, for example, various types of authentication-related information such as the number of times that authentication is attempted, a location where authentication is attempted, a security scheme, a set security level, and user activity-related information such as the number of times that login (sign in) is performed and subscription.

According to various embodiments, the authentication server 230 may include a component element that is substantially the same as at least one of the component elements of the electronic device 210. For example, the authentication server 230 may include a communication module, a memory, and a processor. The above-described component elements of the authentication server 230 may be operatively or electrically connected to each other. The communication module of the authentication server 230 may support data communication between the authentication server 230 and an external electronic device (e.g., the electronic device 210, the external electronic device 220, and the management server 240) over a network. The memory of the authentication server 230, when performed by a processor, may perform data communication (e.g., end-to-end encryption communication) with the electronic device 210 and the external electronic device 220 via a network so as to authenticate user account information, and when the authentication is successfully performed, may complete authentication of the electronic device 210 and perform registration. Although not illustrated, the authentication server 230 may include a login (sign in) server or may communicate with a separate login server, so as to log in to the electronic device 210 of which authentication has been completed.

According to various embodiments, when receiving a user authentication request from the electronic device 210, the authentication server 230 may transfer the user authentication request in the formed of, for example, a push message, to the external electronic device 220 capable of performing user authentication. When user authentication is performed using the external electronic device 220, the authentication server 230 may enable a login server to perform logging in to an account after completion of successful authentication of the electronic device 210. In this instance, the electronic device 210 may specify the external electronic device 220 to be used for user authentication, and may request user authentication from the authentication server 230.

According to various embodiments, the electronic device 210 may include a processor 211 (e.g., the processor 120 of FIG. 1), a memory 215 (e.g., the memory 130 of FIG. 1), a user interface module 213 (e.g., the display module 160, the input module 150, the sound output module 155 and/or audio module 170, and the sensor module 176 of FIG. 1), and a communication circuit 217 (e.g., the communication module 190 of FIG. 1). According to an embodiment, at least one of the component elements may be omitted in the electronic device 210 or some component elements (e.g., the antenna module 197 of FIG. 1) may be added thereto. Hereinafter, for ease of description, duplicated descriptions of the above-described component elements of the electronic device 101 of FIG. 1 may be omitted.

According to an embodiment, to perform user authentication, the processor 211 of the electronic device 210 may search for the external electronic device 220 capable of performing authentication by using a first communication module 218 of the communication circuit 217. To this end, the processor 211 may obtain information associated with various authentication schemes such as authentication schemes supported by the external electronic device 220, for example, PIN code input, fingerprint recognition, biometric recognition, or a QR code, and may obtain various types of information such as the number of times that login is performed, an IP address, and location information.

According to various embodiments, the memory 215 may store various data such as a basic program, an application program, configuration information for operation of the electronic device 210. The memory 215 may be embodied as volatile memory, non-volatile memory, or a combination of volatile memory and non-volatile memory. The memory 215 may provide data stored therein in response to a request from the processor 211.

According to various embodiments, the user interface module 213 may provide authentication information (e.g., a PIN number) to the outside (e.g., a user) of the electronic device 210 via visual information or acoustic information.

According to an embodiment, the user interface module 213 may include a touch sensing circuit (or a touch sensor) (not illustrated), a pressure sensor capable of measuring the intensity of a touch, and/or a touch screen including a touch panel (e.g., a digitizer) capable of detecting a magnetic field-based stylus pen. According to an embodiment, the touch screen may include a liquid crystal display (LCD), an organic light emitted diode (OLED), an active matrix organic light emitted diode (AMOLED), a flexible display, or an expandable display. According to an embodiment, the user interface module 213 may provide various types of information and/or guidance for providing guidance on an authentication operation, via various types of visual information.

According to an embodiment, the user interface module 213 may include a microphone, a mouse, a keyboard, or a key (e.g., a button) for receiving commands or data to be used for authentication of the electronic device 210, from the outside (e.g., a user) of the electronic device 101. According to an embodiment, the user interface module 213 may include a speaker, and may provide, via acoustic information, various types of information and/or guidance for providing guidance on an authentication operation.

According to various embodiments, the communication circuit 217 may support data communication between the electronic device 210 and an external electronic device (e.g., the external electronic device 220, the authentication server 230, or the management server 240) over a network. According to an embodiment, the communication circuit 217 may include a first communication module 218 configured to support wireless communication of the electronic device 210 based on digital living network alliance (DLNA), BLE, UWB, Zigbee, and/or wireless fidelity (Wi-Fi) 2.4GHz that utilizes a home network, and a second communication module 219 configured to support wireless communication of the electronic device 210 via a second network (e.g., a cellular network) (e.g., the second network 199 of FIG. 1). For example, the processor of the electronic device 210 may perform communication with the external electronic device 220 via the first communication module 218. For example, the electronic device 210 may perform communication with the authentication server 230 using the second communication module 219.

According to various embodiments, the electronic device 210 may additionally include a biometric sensor (not illustrated) (e.g., the sensor module 176 of FIG. 1) to produce data to be used for recognition of the biometric information of a user. For example, the biometric sensor may include a fingerprint sensor for sensing a user fingerprint and/or an image sensor (e.g., an infrared light sensor) for sensing a feature point of the iris or face of a user.

According to various embodiments, the electronic device 210 and the external electronic device 220 may be electronic devices capable of performing communication in a local network or a home network that uses the same IP address. For example, the electronic device 210 and the external electronic device 220 may transmit and receive various types of information by performing DLNA communication based on WiFi within a home network.

According to various embodiments, an electronic device (e.g., the electronic device 101 of FIG. 1 or the electronic device 210 of FIG. 2 or FIG. 3) may include a communication circuit (e.g., the communication circuit 217 of FIG. 3), a user interface module (e.g., the user interface module 213 of FIG. 3), and a processor (e.g., the processor 211 of FIG. 3) operatively connected to the communication circuit and the user interface module, and the processor is configured to identify at least one neighboring electronic device (e.g., the external electronic device 220 of FIG. 2 or FIG. 3) that is capable of performing user authentication in response to a user authentication request, to provide, via the user interface module, the list of the at least one neighboring electronic device capable of performing user authentication, and to transmit, to an authentication server, a request for user authentication to be performed via an electronic device selected from the list of the at least one neighboring electronic device capable of performing user authentication. A neighboring device may be a device provided on a same network as the electronic device to be authenticated. A neighboring device may be a device located within a predetermined distance or certain proximity of the electronic device to be authenticated. For example, the neighboring device may be located within 3m, or 5m, or 10m, or 50m of the electronic device to be authenticated. A neighboring device may be a device provided in a same location as the electronic device to be authenticated. For example, the neighboring device may be a device located in a same room, or a same building, or a same floor, or a same vehicle as the electronic device to be authenticated. A neighboring device may be a device connected to a same WiFi router as the electronic device to be authenticated. A neighboring device may be a device within a range that is connectable to the electronic device to be authenticated via a short-range communication network, such as Bluetooth.

According to various embodiments, the list of the at least one neighboring electronic device may be produced based on authentication-related information of the at least one neighboring electronic device.

According to various embodiments, the authentication-related information may include at least one of device identification information, location information, a security level, a history of previously authenticating the electronic device, or an authentication method in association with the at least one neighboring electronic device. Advantageously, this makes it easier, quicker and more convenient for a user to select an appropriate authenticating device because the user can more easily determine a device which meets the needs of a user in any particular situation.

According to various embodiments, the processor may be configured to search for the at least one neighboring electronic device over a short-range communication network, and to obtain the authentication-related information from the at least one retrieved neighboring electronic device.

According to various embodiments, the processor may be configured to obtain, from the authentication server, at least one of the authentication-related information or the list of the at least one neighboring electronic device capable of performing user authentication.

According to various embodiments, the processor may be configured to transmit a multi-cast message for searching for the at least one neighboring electronic device, to obtain the authentication-related information from the at least one neighboring electronic device that responds to the multi-cast message, and to request the authentication server to perform user authentication using the selected electronic device.

According to various embodiments, the processor may be configured to produce a priority order based on the authentication-related information of the at least one neighboring electronic device, and to provide the list of the at least one neighboring electronic device according to the priority order. Advantageously, this enables a user to more conveniently, quickly and easily select an appropriate neighboring device to perform the authentication, and so enables a user to more quickly and efficiently authenticate the electronic device.

According to various embodiments, the processor may be configured to provide the list arranged in colors distinguished based on the priority order. Advantageously, this enables a user to more readily find and select an appropriate neighboring device to perform the authentication of the electronic device.

According to various embodiments, the priority order may be produced based on a security level among the authentication-related information. Advantageously, this enables a user to more readily determine and select an authenticating device with an appropriate security level to ensure the security of the user's data.

According to various embodiments, the processor may be configured to identify, via the authentication server, whether the authentication using the selected electronic device is successfully performed, and to perform user login (sign in) in response to the successful authentication.

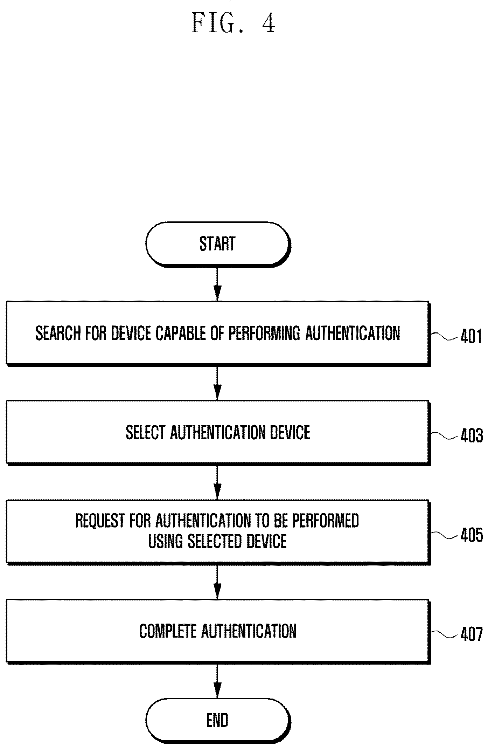

FIG. 4 is a flowchart illustrating the operation of an electronic device according to various embodiments.

Referring to FIG. 4, a processor (e.g., the processor 211 of FIG. 3) of an electronic device (e.g., the electronic device 210 of FIG. 2 or FIG. 3) may control overall operations of the electronic device, so as to communicate with an authentication server (e.g., the authentication server 230 of FIG. 2 or FIG. 3) and an external electronic device (e.g., the external electronic device 220 of FIG. 2 or FIG. 3) via a communication circuit (e.g., the communication circuit 217 of FIG. 3), and to perform user authentication of the electronic device via the external electronic device.

According to an embodiment, the processor of the electronic device may search for a device capable of performing authentication in operation 401.

When an input for user authentication is received, the processor of the electronic device may provide a user interface for user authentication when user authentication is identified as being allowed with reference to a user authentication history, and may enable a user authentication operation to begin. The user authentication history may include, for example, the number of times that registration as a user account or login (sign-in) to a user account is attempted during a predetermined period of time, whether login to the corresponding account is requested and is successfully performed, an IP address, or location information. For example, the processor may provide a user interface by simplifying user authentication in the case the degree of security risk is low in consideration of whether the number of times of failure of login during a predetermined period of time is less than a predetermined number (e.g., 5 times), whether the number of times of successful login is greater than or equal to a predetermined number (e.g., 10 times), whether the percentage of successful logins during a predetermined period of time is greater than or equal to a predetermined percentage (e.g. 50%, or 75%, or 95%), whether the percentage of failed login attempts during a predetermined period of time is less than a predetermined percentage (e.g, 50%, or 25%, or 10%, or 5%) and/or whether an IP address is changed. The predetermined period of time may be any period of time such as 1 day, 1 week, 1 month, 1 year, or all time.

According to an embodiment, in order to search for a device capable of performing authentication, the processor of the electronic device may transmit a message to other neighboring electronic devices which are present in the same local network, including the external electronic device, in a multi-cast scheme using, for example, a DLNA function, and may receive device identifiers from other neighboring electronic devices that perform responding. In this instance, the device identifiers or user information capable of performing authentication may be received in a hashed (Hash) or encrypted state.

According to an embodiment, the processor of the electronic device may perform communication with other neighboring electronic devices that are present in the same local network, including the external electronic device, and may obtain service information, for example, authentication-related information via an additional request or together with device identifiers from other neighboring electronic devices by using, for example, a DLNA function. The processor of the electronic device may identify whether authentication is capable of being performed based on the obtained authentication-related information. The authentication-related information may include, for example, a device identifier, model information, a location or IP address, a security level, a supported user authentication method, and/or a product image (e.g., a homepage address that provides a product image). The supported user authentication method may include, for example, PIN code, fingerprint recognition, face recognition, iris recognition, and QR code authentication methods, and the like.

According to another embodiment, the processor of the electronic device may transmit a user account identifier (ID) that needs to be authenticated to other neighboring electronic devices including the external electronic device, and may request identifying of whether user authentication is capable of being performed. Accordingly, the processor may obtain authentication-related information via response messages received from other electronic devices capable of performing user authentication.

According to another embodiment, in the case that the processor of the electronic device is incapable of obtaining information associated with a device capable of performing authentication directly from other neighboring electronic devices including the external electronic device, the processor may transmit a user account identifier to the authentication server, and may request and obtain the list of devices capable of performing authentication.

According to various embodiments, the processor of the electronic device may receive selection of an external electronic device capable of performing authentication via a user interface module (the user interface module 213 of FIG. 3) of the electronic device in operation 403.

According to an embodiment, the processor of the electronic device may obtain authentication-related information associated with a device capable of performing authentication from other neighboring electronic devices including the external electronic device, and based thereon, may provide information associated with a device capable of performing authentication via a display including a touch screen or a non-touch screen, or a speaker. As described above with reference to FIG. 2, the electronic device may include a portable communication device (e.g., a smartphone), a computer device, a portable multimedia device, a portable medical device, a camera, a wearable device, or various home appliances. Accordingly, in the case that the electronic device includes a display, authentication-related information associated with a device capable of performing authentication is provided via visual information using a display, or in the case that the electronic device includes a speaker, the authentication-related information may be provided via acoustic information using a speaker, separately from or in addition to the visual information. According to an embodiment, in the case that the electronic device is embodied as a refrigerator, information associated with neighboring devices (e.g., a TV, a speaker, a PC) capable of performing authentication and authentication-related information such as authentication code may be provided as an audio notification via a speaker of the refrigerator. For example, an audio notification such as "Authentication is capable of being performed using a TV, a speaker, or a PC. ", "The authentication code is 1234. ", or "Please tell a device to perform authentication." may be output via the speaker of refrigerator. Accordingly, in the case that a user selects authentication to be performed using a TV, the TV may provide a notification associated with input of authentication code such as "An authentication request has been received from the refrigerator." or "Please tell the authentication code.", via visual information using a display or via acoustic information using a speaker. Accordingly, the user may perform authentication by inputting authentication code in the manner of input to a screen using a remote controller or voice input using a microphone.

According to an embodiment, in the case that the electronic device is embodied as a TV, for example, authentication code may be provided together with information associated with a neighboring device (e.g., a washing machine or a speaker) capable of performing authentication, via the display of the TV. Accordingly, in the case that a user selects a refrigerator, the refrigerator may provide authentication-related information such as "A request for authentication has been received from the TV. Please tell the authentication code displayed on the TV screen." via an audio notification using a speaker contained in the refrigerator. Accordingly, in the case that a user tells the authentication code such as "1234", the refrigerator may perform authentication by receiving and recognizing the authentication code using a microphone included therein, and may provide an audio notification such as "Authentication has been completed." via an audio notification when authentication is completed.

According to an embodiment, based on the degree of ease of authentication based on location information such as a distance from the electronic device, the degree of security of a supported authentication method, or the security information such as whether a device is used by multiple users or the number of times of failure of login, or percentage of failed login attempts, in association with, for example, other electronic devices capable of performing authentication, the processor of the electronic device may produce authentication-related information and provide the same via a user interface module or the like.

According to an embodiment, based on the degree of ease of authentication based on location information such as a distance from the electronic device, a location of the authenticating device compared to the electronic device such as whether the devices are provided in a same room, a same building, or a same floor of a building, the degree of security of a supported authentication method, or the security level information such as whether a device is used by multiple users or the number of times (or percentage) of failure of login, or user information such as user preferences of a preferred type of authentication method (for example, a user with a visual impairment may have a preference for auditory authentication methods or voice recognition authentication methods over authentication methods which require making a touch input on a touch screen display), or a preferred type of authenticating device, the processor of the electronic device may set a priority order of the devices capable of performing authentication, may arrange the devices according to the priority order, and may provide the same as authentication-related information. For example, a fingerprint recognition scheme and/or a PIN code authentication scheme using an SMS or an e-mail may have a higher security level than a face recognition scheme. Specifically, user authentication performed by comparing an ID card and input information or user authentication performed using a bank account or the like may be determined as having a significantly high security level. In addition, a device of which the location is frequently changed, a device used by multiple users, or a device to which logging in fails many times may be determined as having a low security level.

According to an embodiment, the processor may distinguish the devices capable of performing authentication by, for example, three levels, using different colors, letters, numbers, or the like, so as to identify a security level.

According to various embodiments, in operation 405, the processor of the electronic device may request the authentication server to perform authentication using the selected electronic device (hereinafter, referred to as the external electronic device 220).

According to an embodiment, the processor of the electronic device may transmit, to the authentication server, information associated with the selected external electronic device together with user account information, for example, an authentication request message including a device identifier. In this instance, the information such as a device identifier or the like may be encrypted according to a symmetric encryption scheme or asymmetric encryption scheme. Specifically, in the case of asymmetric encryption, a public key signature scheme may be used. In this instance, a public key may be provided in advance or may be included in the authentication request.

According to various embodiments, the processor of the electronic device may identify, via the authentication server, whether user authentication is successfully completed or fails in operation 407.

According to an embodiment, the authentication server that receives a request for authentication to be performed using the selected external electronic device from the electronic device may identify, using, for example, a management server (e.g., the management server 240 of FIG. 2 or FIG. 3), whether the selected external electronic device is a device capable of performing authentication, and may request user authentication from the identified external electronic device. In this instance, the authentication server may transmit, to the external electronic device, the authentication request in the form of an e-mail, an SMS, or a push message. Accordingly, in the case that user authentication is accepted by the external electronic device, a response message may be transmitted to the authentication server in response thereto. In this instance, the response message may be encrypted. Specifically, authentication based on biometric information such as fingerprint, iris, or face recognition, or the like, or authentication relying on the memory of a user such as a PIN, a pattern composing a predetermined line on a touch screen, or a password, may be performed by performing identification internally in the external electronic device 220, and a result thereof may be encrypted using an encryption key registered in advance and may be transmitted. As the encryption scheme, a public key scheme may be available, and particularly, a public key signature scheme may be used. The authentication server may decode the encrypted authentication result, may identify that authentication information has been normally transferred, may identify authentication result information associated with the authentication performed in the device, and may enable the management server 240 to record that user authentication has been successfully completed. According to an embodiment, when the electronic device identifies that authentication is successfully completed, the electronic device may request a login (sign in) server to perform logging in (sign in). The login server may transfer, to the management server 240, a login record associated with an electronic device to which logging in has been completed so that the login record may be recorded and thus, the electronic device may be registered as a device capable of performing user authentication.

According to an embodiment, in the case that the selected external electronic device has a security risk factor or in the case that security requirements for a resource to be accessed are high, in consideration of authentication-related information of the selected external electronic device, for example, information associated with the number of times that authentication is attempted or the location where authentication is attempted, the authentication server may request another electronic device different from the selected external electronic device to perform additional authentication. In this instance, additional user authentication is needed for security, the authentication server may request another authentication method from the same device, or may transmit an authentication confirm request to another electronic device and may complete authentication via user identification performed using the other electronic device that receives the request.

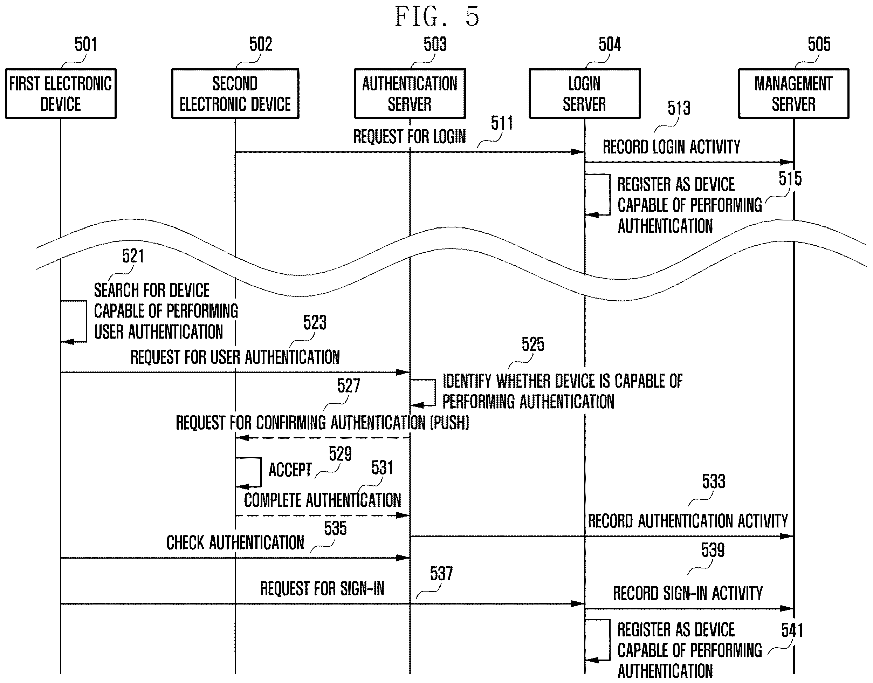

FIG. 5 is a diagram illustrating an example of a signal flow in association with operation performed among an electronic device, another electronic device, and a server according to various embodiments.

Referring to FIG. 5, a first electronic device 501 (e.g., the electronic device 210 of FIG. 2 or FIG. 3) may perform communication with an authentication server 503 (e.g., the authentication server 230 of FIG. 2 or FIG. 3) and/or a second electronic device 502 (e.g., the external electronic device 230 of FIG. 2 or FIG. 3), and may perform user authentication of the first electronic device 501 via the second electronic device 502. A login server 504 may be referred to as a registration server, and may be embodied separately from the authentication server 503 or may be embodied to integrate with the authentication server 503. The management server 505 may record and manage a user activity record related to electronic devices, and may be embodied separately from the authentication server 503 or may be embodied to integrate with the authentication server 503.

According to an embodiment, the second electronic device 502 may be a device that is registered with the login server 504 as a device capable of performing authentication via operations 511 to 515. To this end, the second electronic device 502 may request login via the authentication server 503 in operation 511. When authentication and login is completed, a login server records a login activity (sign in activity) record in the management server 505 in operation 513, and the second electronic device 502 may be recorded with the login server 504 as a device capable of performing authentication in operation 515. In this instance, to safely transfer an authentication result when user authentication is needed later, the corresponding second electronic device 502 may register an encryption key with the authentication server 503. Specifically, the public key encryption scheme may be applied as the encryption key. In this instance, the second electronic device 502 may produce a private key and a public key, and may transfer the public key to the authentication server 503. This considers a public key signature scheme. When authentication information is transferred to the authentication server 503 later, an authentication result obtained from the device may be encrypted with a private key, and may enable the authentication server 503 to identify that the authentication result is not forged by utilizing a public key registered by the corresponding device.

According to input for user authentication, the first electronic device 501 may search for a device capable of performing user authentication in operation 521.

According to an embodiment, the processor of the electronic device may transmit a request message to other neighboring electronic devices which are present in the same local network, including the second electronic device 502, in a multi-cast scheme using, for example, a DLNA function, and may receive device identifiers from other neighboring electronic devices that perform responding. The device identifier may be received in a hashed (Hash) or encrypted state.

According to an embodiment, the first electronic device 501 may perform communication with other neighboring electronic devices which are present in the same local network, including the second electronic device 502, and may obtain service information, for example, authentication-related information via an additional request or together with device identifiers from other neighboring electronic devices by using, for example, a DLNA function. The first electronic device 501 may identify whether authentication is capable of being performed based on the obtained authentication-related information. The authentication-related information may include, for example, a device identifier, model information, a location or IP address, a security level, a supported user authentication method, and/or a product image (e.g., a homepage address that provides a product image). The supported user authentication method may include, for example, PIN code, fingerprint recognition, face recognition, iris recognition, and QR code authentication methods, or any other user authentication method.

According to another embodiment, the first electronic device 501 may transmit a user account identifier (ID) that needs to be authenticated to other neighboring electronic devices including the second electronic device 502, and may request identifying of whether user authentication is capable of being performed. Accordingly, the processor may obtain authentication-related information via response messages received from other electronic devices capable of performing user authentication.

According to an embodiment, the first electronic device 501 may provide information associated with devices capable of performing authentication to a user so that, based on the authentication-related information of the devices capable of performing authentication obtained from other neighboring electronic devices including the second electronic device 502, the user may select a device from which authentication is to be requested.

According to an embodiment, the information associated with the devices capable of performing authentication may include authentication-related information produced based on the degree of ease of authentication based on location information such as a distance from the first electronic device 501, the degree of security of a supported authentication method, or the security information such as whether a device is used by multiple users or the number of times of failure of login.

According to various embodiments, in operation 405, the first electronic device 501 may request the authentication server to perform authentication using the selected electronic device (hereinafter, referred to as the second electronic device 501 (220)).

According to various embodiments, in operation 523, the first electronic device 501 may transmit, to the authentication server 503, a message that requests for authentication to be performed using the second electronic device 502 that is the selected device capable of performing authentication.

According to an embodiment, the first electronic device 501 may transmit, to the authentication server 503, an authentication request message including the information associated with the selected second electronic device 502, for example, a device identifier of the second electronic device 502, together with user account information.

According to an embodiment, the authentication server 503 that receives a request for authentication to be performed using the selected second electronic device 502 from the first electronic device 501 may identify whether the selected second electronic device 502 is a device capable of performing authentication in operation 525, and may transfer a user authentication request to the identified second electronic device 502 in operation 527. In this instance, the authentication server may transmit, to the second electronic device 502, the authentication request in the form of an e-mail, an SMS, or a push message. Accordingly, in the case that user authentication is accepted in the second electronic device 502 in operation 529, a response message indicating completion of authentication may be transmitted to the authentication server 503 in operation 531. In this instance, an authentication result may be encrypted, and a private key corresponding to the public key registered in operation 515 in which the device capable of performing authentication is registered may be utilized. The authentication server 503 may transmit a message indicating that user authentication has been successfully completed so that an authentication activity is recorded in the management server 505 in operation 533.

According to an embodiment, the first electronic device 501 may identify, via the authentication server 503, whether authentication is successfully completed in operation 535. If it is identified that authentication has been completed, the first electronic device 501 may request the login server 504 to perform login (sign in) directly or via the authentication server 503. The login server 504 may transfer a login record associated with the first electronic device 501 to which logging in has been completed to the management server 505, so as to record the same therein. Accordingly, the first electronic device 501 may be registered as a device capable of performing user authentication in operation 541.

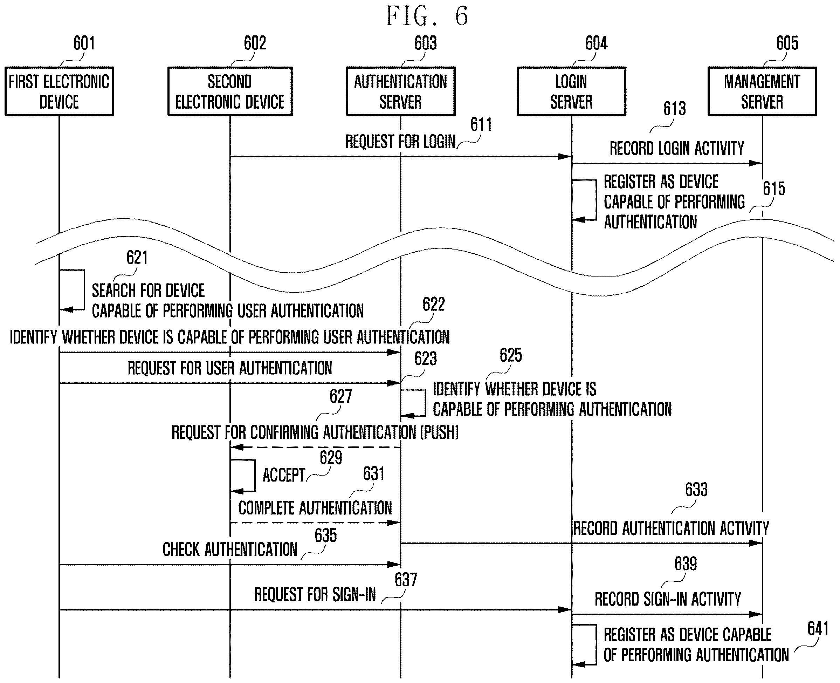

FIG. 6 is a diagram illustrating another example of a signal flow in association with operation performed among an electronic device, another electronic device, and a server according to various embodiments.

Referring to FIG. 6, a first electronic device 601 (e.g., the electronic device 210 of FIG. 2 or FIG. 3) may perform communication with an authentication server 603 (e.g., the authentication server 230 of FIG. 2 or FIG. 3) and/or a second electronic device 602 (e.g., the external electronic device 230 of FIG. 2 or FIG. 3), and may perform user authentication of the first electronic device 601 via the second electronic device 602. A login server 604 may be referred to as a registration server, and may be embodied separately from the authentication server 603 or may be embodied to integrate with the authentication server 603. The management server 605 may record and manage user activity records related to electronic devices, and may be embodied separately from the authentication server 603 or may be embodied to integrate with the authentication server 603.

According to an embodiment, the second electronic device 601 may be a device that is registered with the login server 604 as a device capable of performing authentication via operations 611 to 615. To this end, the second electronic device 602 may request login via the authentication server 603 in operation 611. When authentication and login is completed, a login server records a login activity (sign in activity) record in the management server 605 in operation 613, and the second electronic device 602 may be recorded with the login server 604 as a device capable of performing authentication in operation 615.

According to input for user authentication, the first electronic device 601 may search for a device capable of performing user authentication in operation 621.

According to an embodiment, the processor of the electronic device may transmit a request message to other neighboring electronic devices which are present in the same local network, including the second electronic device 602, in a multi-cast scheme using, for example, a DLNA function, and may receive device identifiers from other neighboring electronic devices that perform responding. The device identifier may be received in a hashed (Hash) or encrypted state.

According to an embodiment, the first electronic device 601 may perform communication with other neighboring electronic devices which are present in the same local network, including the second electronic device 602, and may obtain service information, for example, authentication-related information via an additional request or together with device identifiers from other neighboring electronic devices by using, for example, a DLNA function. The first electronic device 601 may identify whether authentication is capable of being performed based on the obtained authentication-related information. The authentication-related information may include, for example, a device identifier, model information, a location or IP address, a security level, a supported user authentication method, and/or a product image (e.g., a homepage address that provides a product image). The supported user authentication method may include, for example, PIN code, fingerprint recognition, face recognition, iris recognition, and QR code authentication methods.

According to another embodiment, the first electronic device 601 may transmit a user account identifier (ID) that needs to be authenticated to other neighboring electronic devices including the second electronic device 602, and may request for identifying whether user authentication is capable of being performed. Accordingly, the processor may obtain authentication-related information via response messages received from other electronic devices capable of performing user authentication.

According to an embodiment, the first electronic device 601 may provide information associated with devices capable of performing authentication to a user so that, based on the authentication-related information of devices capable of performing authentication obtained from other neighboring electronic devices including the second electronic device 602, the user may select a device from which authentication is to be requested.

According to an embodiment, the information associated with the devices capable of performing authentication may include authentication-related information produced based on the degree of ease of authentication based on location information such as a distance from the first electronic device 601, the degree of security of a supported authentication method, or the security information such as whether a device is used by multiple users or the number of times of failure of login.

According to an embodiment, in the case that the processor of the electronic device is incapable of obtaining information associated with a device capable of performing authentication directly from other neighboring electronic devices including the second electronic device 602, the processor may transmit a user account identifier to the authentication server, and may request and obtain the list of devices capable of performing authentication in operation 622.

According to various embodiments, in operation 623, the first electronic device 601 may transmit, to the authentication server 603, a message that requests for authentication to be performed using the second electronic device 602 that is the selected device capable of performing authentication.

According to an embodiment, the first electronic device 601 may transmit, to the authentication server 603, an authentication request message including the information associated with the selected second electronic device 602, for example, a device identifier of the second electronic device 602, together with user account information.

According to an embodiment, the authentication server 603 that receives a request for authentication to be performed using the selected second electronic device 602 from the first electronic device 601, may identify whether the selected second electronic device 602 is a device capable of performing authentication in operation 625, and may transfer a user authentication request to the identified second electronic device 602 in operation 627. In this instance, the authentication server may transmit, to the second electronic device 602, the authentication request in the form of an e-mail, an SMS, or a push message. Accordingly, in the case that user authentication is accepted in the second electronic device 602 in operation 629, a response message indicating completion of authentication may be transmitted to the authentication server 603 in operation 631. In this instance, an authentication result may be encrypted, and a private key corresponding to a public key registered in operation 615 in which the device capable of performing authentication is registered may be utilized. The authentication server 603 may transmit a message indicating that user authentication has been successfully completed so that an authentication activity is recorded in the management server 505 in operation 633.

According to an embodiment, the first electronic device 601 may identify, via the authentication server 603, whether authentication is successfully completed in operation 635. If it is identified that authentication has been completed, the first electronic device 601 may request the login server 603 to perform login (sign in) directly or via the authentication server 604. The login server 604 may transfer a login record associated with the first electronic device 601 to which logging in has been completed to the management server 605 so as to record the login record therein. Accordingly, the first electronic device 601 may be registered as a device capable of performing user authentication in operation 641.

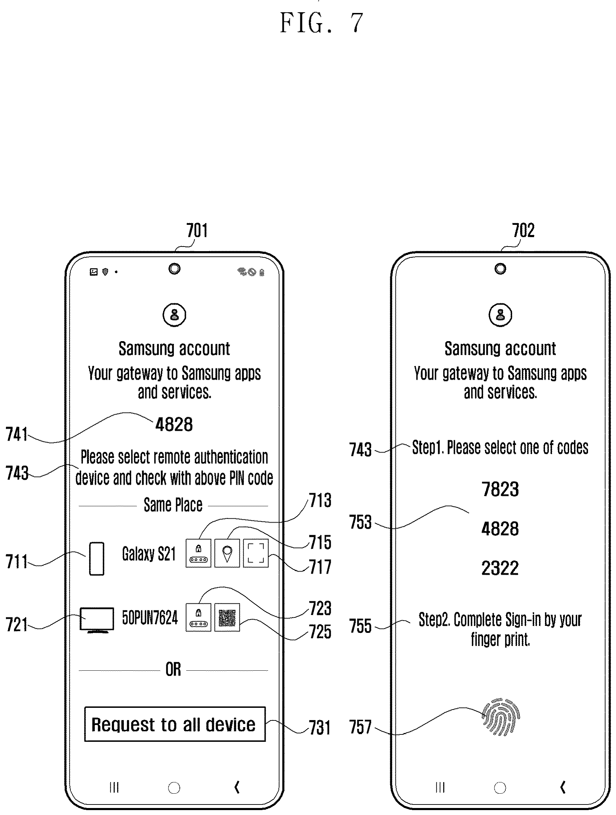

FIG. 7 is a diagram illustrating an example of an authentication screen associated with an authentication operation performed between an electronic device and another electronic device according to various embodiments.

Referring to FIG. 7, for authentication, an electronic device (e.g., the electronic device 210 of FIG. 2 or FIG. 3) may perform user authentication via another electronic device (e.g., the external electronic device 220 of FIG. 2 or FIG. 3) capable of performing authentication.

According to an embodiment, in the case that the electronic device executes an authentication app for logging in to a user account, a screen 701 may be provided.

According to an embodiment, in the electronic device, if a user account identifier for logging in to a user account is input, an authentication code 741 is provided to the screen 701 as illustrated in the drawing, and a portable phone 711 and a display device 721 may be retrieved in response to a search for another electronic device capable of performing authentication.

The screen 701 of the electronic device may display visual objects including images and/or text indicating the portable phone 711 and the display device 721 that are retrieved other neighboring electronic devices capable of performing authentication, together with the visual objects 713, 715, 717, 723, and 725 indicating authentication methods performed by respective devices. In this instance, each authentication may display the security level of each device capable of performing authentication with a color, a letter, a number, or the like.

According to an embodiment, it is indicated that authentication methods of the PIN number scheme 713, the fingerprint recognition scheme 715, and the face recognition scheme 717 may be performed via the portable phone 711. It is indicated that authentication methods of a PIN number scheme 723 and a QR code scheme 725 may be performed via the display device 721.

The screen 701 of the electronic device that needs to be authenticated may not select one of the neighboring electronic devices capable of performing authentication, but may additionally provide a visual object 731 for transmitting an authentication request to all devices.

According to an embodiment, in the case that a user selects the portable phone 711 via the screen 701 of the electronic device that needs to be authenticated, the electronic device may request an authentication server (e.g., the authentication server 230 of FIG. 2 or FIG. 3) to perform authentication using the selected portable phone 711. Accordingly, the authentication server may identify whether the corresponding portable phone 711 is a device capable of performing authentication, and may transfer an authentication request, for example, a push message, to the corresponding portable phone 711.

According to an embodiment, another electronic device (e.g., the portable phone 711) that receives an authentication request may provide a screen 702 to authenticate a user account.

The screen 702 of the other electronic device may display a visual object 753 for selecting and inputting an authentication code. In the case of access to information that requires a high level of security according to a security level, the screen 702 may require additional authentication, for example, fingerprint authentication 757.

In the case that authentication using the screen 702 of the other electronic device has been completed, the authentication server may complete authentication of the electronic device and may enable a login server to allow logging in to the electronic device.

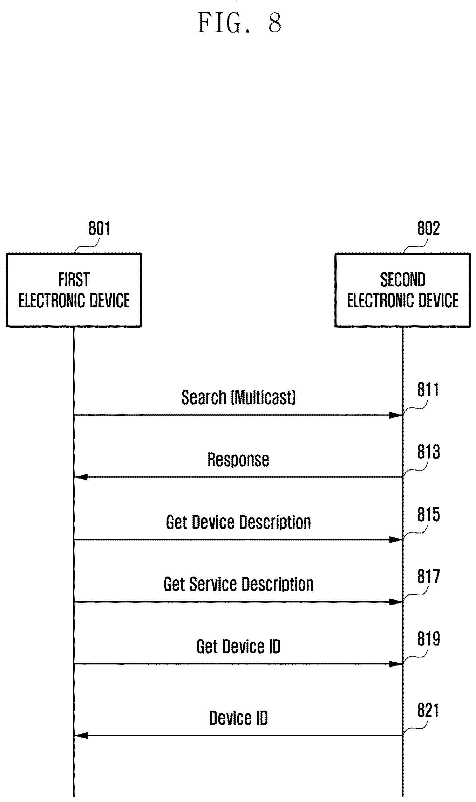

FIG. 8 is a diagram illustrating an example of a signal flow that describes an operation of searching for another electronic device capable of performing authentication, by an electronic device according to various embodiments.

According to an embodiment, a first electronic device 801 (e.g., the electronic device 210 of FIG. 2 or FIG. 3) may transmit a search message according to, for example, a multi-cast scheme by using a DLNA function, to other neighboring electronic devices that are present in the same local network, including a second electronic device 802 (e.g., the external electronic device 220 of FIG. 2 or FIG. 3) in operation 811, in order to search for a device capable of performing authentication.

According to an embodiment, the second electronic device 802 that receives the search message may transmit a response message to the first electronic device 801 in response to the search message in operation 813. For example, other electronic devices capable of transmitting response messages may include devices that are capable of receiving a search message and responding thereto according to a DLNA specification.

According to an embodiment, the first electronic device 801 that receives the response message from the second electronic device 802 may obtain device information including information associated with a location or IP address, a device image, a device type, or the like, from the second electronic device 802 in operation 815.

According to an embodiment, the first electronic device 801 may obtain service information from the second electronic device 802 in operation 817. The service information may include information associated with an authentication service provided from the second electronic device 802, for example, an authentication service identifier or description of an authentication service specification. Accordingly, the first electronic device 801 may identify whether the second electronic device 802 is a device capable of performing authentication, and may obtain a device identifier (device ID) and a user identifier of the device.

According to an embodiment, based on the device information and service information, the first electronic device 801 may request a device ID from the second electronic device 802 in operation 819 and may obtain a user ID of the device in operation 821. The first electronic device 801 may hash (Hash) or encrypt a user ID and may transfer the same via the request in order to identify whether the second electronic device 802 is a device capable of performing authentication of a desired user. In this instance, in the case that the second electronic device 802 is a device that is incapable of supporting the same, an error may be returned. In the case that the second electronic device 802 is capable of normally supporting the same, a device ID and a user ID of the device may be received in a hashed (Hash) or encrypted state.

According to an embodiment, based on the obtained device ID, the processor of the electronic device may obtain authentication-related information including model information, a location or IP address, a security level, a supported user authentication method, and/or a product image (e.g., a homepage address that provides a product image) of the device.

According to various embodiments, a method of an electronic device (e.g., the electronic device 101 of FIG. 1 or the electronic device 210 of FIG. 2 or FIG. 3) may include an operation of identifying at least one neighboring electronic device (e.g., the external electronic device 220 of FIG. 2 or FIG. 3) capable of performing user authentication in order to perform user authentication for the electronic device, an operation of providing a list of the at least one neighboring electronic device capable of performing user authentication, and an operation of transmitting, to an authentication server, a user authentication request for performing user authentication using an electronic device selected from the list of the at least one neighboring electronic device capable of performing user authentication.

According to various embodiments, the list of the at least one neighboring electronic device may be produced based on authentication-related information of the at least one neighboring electronic device.

According to various embodiments, the authentication-related information may include at least one of device identification information, location information, a security level, or an authentication method in associated with the at least one neighboring electronic device.

According to various embodiments, the operation of identifying of the at least one neighboring electronic device capable of performing user authentication may include an operation of searching for the at least one neighboring electronic device over a short-range communication network, and an operation of obtaining the authentication-related information from the at least one retrieved neighboring electronic device.

According to various embodiments, at least one of the authentication-related information or the list of the at least one neighboring electronic device capable of performing user authentication may be obtained from the authentication server.

According to various embodiments, the operation of searching for the at least one neighboring electronic device may include an operation of transmitting a multi-cast message for searching for the at least one neighboring electronic device and an operation of obtaining the authentication-related information from the at least one neighboring electronic device that responds to the multi-cast message, and the operation of requesting the user authentication may request the authentication server to perform user authentication using the selected electronic device.

According to various embodiments, the method may further include an operation of producing a priority order based on the authentication-related information of the at least one neighboring electronic device, and the operation of providing the list may provide the list of the at least one neighboring electronic device according to the priority order.

According to various embodiments, the operation of providing the list may provide the list arranged in colors distinguished based on the priority order.

According to various embodiments, the priority order may be produced based on a security level among the authentication-related information.

According to various embodiments, the method may further include an operation of identifying, via the authentication server, whether authentication using the selected electronic device is successfully performed, and an operation of performing user login (sign in) in response to the successful authentication.

The embodiments of the disclosure are provided merely for ease of description and understanding of the content of the technology, but are not intended to limit the scope of the technology disclosed herein. Therefore, the scope of the technology disclosed herein should be construed to include all changes or modifications derived based on the technical idea of the various embodiments of the disclosure, in addition to the embodiments provided herein.

It will be appreciated that the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device comprising:
a communication circuit;
a user interface module; and
a processor operatively connected to the communication circuit and the user interface module,
wherein the processor is configured to:
identify at least one neighboring electronic device that is capable of performing user authentication in response to a user authentication request;
provide, via the user interface module, a list of the at least one neighboring electronic device capable of performing user authentication; and
transmit a request to an authentication server for performing user authentication using an electronic device selected from the list of the at least one neighboring electronic device capable of performing user authentication.

2. The electronic device of claim 1, wherein the list of the at least one neighboring electronic device is produced based on authentication-related information of the at least one neighboring electronic device.

3. The electronic device of claim 2, wherein the authentication-related information comprises at least one of device identification information, location information, a security level, or an authentication method in association with the at least one neighboring electronic device.

4. The electronic device of claim 2 or claim 3, wherein the processor is further configured to search for the at least one neighboring electronic device over a short-range communication network, and to obtain the authentication-related information from the at least one retrieved neighboring electronic device.

5. The electronic device of any of claims 2 to 4, wherein the processor is further configured to obtain, from the authentication server, at least one of the authentication-related information or the list of the at least one neighboring electronic device capable of performing user authentication.

6. The electronic device of any of claims 2 to 5, wherein the processor is further configured to transmit a multi-cast message for searching for the at least one neighboring electronic device, to obtain the authentication-related information from the at least one neighboring electronic device that responds to the multi-cast message, and to request the authentication server to perform user authentication using the selected electronic device.

7. The electronic device of any of claims 2 to 6, wherein the processor is further configured to produce a priority order based on the authentication-related information of the at least one neighboring electronic device, and to provide the list of the at least one neighboring electronic device according to the priority order.

8. The electronic device of claim 7, wherein the processor is further configured to provide the list arranged in colors distinguished based on the priority order.

9. The electronic device of claim 7 or claim 8, wherein the priority order is produced based on a security level among the authentication-related information.

10. The electronic device of any preceding claim, wherein the processor is further configured to identify, via the authentication server, whether the authentication using the selected electronic device is successfully performed, and to perform user login (sign in) in response to the successful authentication.

11. A method of an electronic device, the method comprising:
identifying at least one neighboring electronic device capable of performing user authentication in order to perform user authentication for the electronic device;
providing a list of the at least one neighboring electronic device capable of performing user authentication; and
transmitting a request to an authentication server for performing user authentication using an electronic device selected from the list of the at least one neighboring electronic device capable of performing user authentication.

12. The method of claim 11, wherein the list of the at least one neighboring electronic device is produced based on authentication-related information of the at least one neighboring electronic device.

13. The method of claim 12, wherein the authentication-related information comprises at least one of device identification information, location information, a security level, or an authentication method in associated with the at least one neighboring electronic device.

14. The method of claim 12 or claim 13, wherein the identifying of the at least one neighboring electronic device capable of performing user authentication comprises:
searching for the at least one neighboring electronic device over a short-range communication network; and
obtaining the authentication-related information from the at least one retrieved neighboring electronic device.

15. The method of any of claims 12 to 14, wherein at least one of the authentication-related information or the list of the at least one neighboring electronic device capable of performing user authentication is obtained from the authentication server.
